# FASCICULE DE BREVET EUROPEEN

(11) **EP 3 217 794 B1**
(45) Date de publication et mention de la délivrance du brevet: **23.01.2019**
(21) Numéro de dépôt: 15820210.1
(22) Date de dépôt: 16.11.2015
(51) Int. Cl.: A01N 37/40, A01P 21/00

(54) **UTILISATION DE GALLATE D'ALKYLE POUR STIMULER LES DÉFENSES NATURELLES DE PLANTES.**
VERWENDUNG VON ALKYL-GALLAT ZUM STIMULIEREN DER NATÜRLICHEN ABWEHRKRÄFTE VON PFLANZEN
USE OF ALKYL GALLATE TO STIMULATE THE NATURAL DEFENSES OF PLANTS

(30) Priorité: 14.11.2014 FR 1461034
(43) Date de publication de la demande: 20.09.2017
(73) Titulaire: Agro Innovation International, 35400 Saint-Malo (FR)
(72) Inventeur: GOUPIL, Pascale, 63170 Perignat-les-Sarlieve (FR); BENOUARET, Razik, 63110 Beaumont (FR); RICHARD, Claire, 63110 Beaumont (FR)
(74) Mandataire: Hubert, Philippe
(86) Numéro de dépôt international: PCT/FR2015/053080
(87) Numéro de publication internationale: WO 2016/075421

(56) Documents cités:
- WO-A2-2009/060165
- M. BRUINSMA ET AL: "Jasmonic acid-induced volatiles of Brassica oleracea attract parasitoids: effects of time and dose, and comparison with induction by herbivores", JOURNAL OF EXPERIMENTAL BOTANY, vol. 60, no. 9, 18 mai 2009 (2009-05-18), pages 2575-2587, XP055199692, ISSN: 0022-0957, DOI: 10.1093/jxb/erp101
- HIRASAWA K I ET AL: "Effects of scavengers for active oxygen species on cell death by cryptogein", PHYTOCHEMISTRY, PERGAMON PRESS, GB, vol. 66, no. 4, 1 février 2005 (2005-02-01), pages 463-468, XP027726490, ISSN: 0031-9422 [extrait le 2005-02-01]

## Description

### Domaine de l'invention

La présente invention concerne l'utilisation d'un gallate d'alkyle pour l'élicitation d'une plante.

### Contexte de l'invention

La bonne santé et la bonne croissance d'une plante sont nécessaires à son développement et à l'obtention de rendement intéressant pour les agriculteurs. Or, les plantes sont perpétuellement soumises à l'agression par des agents pathogènes. Le renforcement des défenses des plantes contre ces agents pathogènes est donc un élément déterminant dans l'efficacité de la résistance des plantes.

Conventionnellement, il est utilisé de façon massive des produits phytopharmaceutiques (fongicide, insecticides) potentiellement toxiques pour lutter contre l'attaque des pathogènes et présentant un impact important pour l'environnement avec de potentielles toxicités pour l'homme.

L'élicitation des plantes vis-à-vis des agents pathogènes est au centre de nombreuses recherches. Des produits organiques de synthèse ont été développés à partir des années 80. Le probénazole, précurseur de la saccharine, fut le premier utilisé et l'est encore contre la pyriculariose du riz au Japon. A la même époque fut développé le phoséthyl-Al, cette molécule et son principal métabolite, l'acide phosphonique sont surtout efficaces contre les Oomycètes. Divers produits contenant du phoséthyl-aluminium sont actuellement homologués en France et commercialisés, dont la concentration en phoséthyl-Al varie de 30 à 80% avec ou sans autre matière active. Les firmes phytosanitaires ont ensuite commercialisé des molécules mimant l'action de l'acide salicylique capable d'induire à lui seul une immunité. Citons pour exemple l'analogue chimique de l'acide salicylique, l'acide 2,6-dichloroisonicotinique ou d'autres éliciteurs de synthèse tels que le benzothiadiazole. D'autres composés présentent également une activité d'élicitation tels que l'acide beta-amino-butyrique (BABA) qui est un composé synthétique.

L'efficacité de ces composés est souvent partielle, spécifique à certaines espèces ou variétés de plantes, ou spécifique au stade de développement des plantes. Certains composés présentent un fort potentiel (BABA) mais ils sont chers à produire en quantités importantes. Ils doivent être le plus souvent associés à des traitements chimiques. De plus, leur action peut être limitée dans le temps et ces composés peuvent présenter une phytotoxicité lorsqu'ils sont utilisés à forte dose. Le document WO 2009/060165 décrit l'utilisation de gallate de propyle pour améliorer l'action d'activateurs de défenses de plantes dans la lutte contre les pathogènes des plantes. L'action du propyl gallate est limitée à ses effets d'inhibition, de suppression ou de diminution des défenses des parasites.

Il existe donc un besoin en un composé respectueux de l'environnement et des plantes auxquelles il est destiné, qui stimule leur système de défense contre les agents pathogènes. De façon surprenante, les présents inventeurs ont trouvé qu'un gallate d'alkyle présentait une telle activité. Le gallate d'alkyle proposé a donc la capacité d'éliciter une plante traitée.

Ainsi, l'invention a pour objet, selon un premier aspect, l'utilisation d'un gallate d'alkyle pour l'élicitation d'une plante.

Selon un second aspect, l'invention a également pour objet, un procédé d'élicitation d'une plante, qui comprend l'application d'une composition comprenant un gallate d'alkyle sur ladite plante, le gallate d'alkyle étant le seul agent actif de ladite composition.

### Description détaillée de l'invention

### Utilisation

Selon un premier aspect, l'invention concerne l'utilisation d'un gallate d'alkyle pour l'élicitation d'une plante.

Au sens de la présente invention, le terme "gallate d'alkyle" désigne un ester de l'acide gallique, représenté par la Formule 1 : 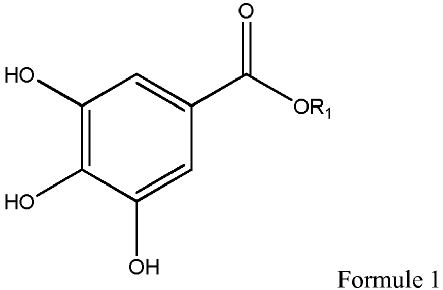 dans laquelle R₁ est un groupe alkyle.

Au sens de la présente invention, le terme "groupe alkyle" désigne un groupe hydrocarbyle linéaire ou ramifié de formule C_{z}H_{2z+1} où z est un entier allant de 1 à 12. Des exemples de groupe alkyle sont le méthyle, l'éthyle, le propyle, l'isopropyle, le butyle, l'isobutyle, le *sec-*butyle, le *tert*-butyle, l'isopentyle.

Selon un mode de réalisation préféré, on utilise un gallate d'alkyle dans lequel le groupe alkyle est un groupe alkyle linéaire comprenant de 1 à 10 atomes de carbone, de préférence de 1 à 6 atomes de carbone.

Selon un mode de réalisation particulièrement préféré, on utilise un gallate d'alkyle dans lequel le groupe alkyle est choisi dans le groupe comprenant le méthyle, l'éthyle et le propyle.

Ces composés existent avantageusement à l'état naturel dans certains fruits des bois et autres végétaux, comme le raisin. Ils peuvent donc être utiliser en agriculture biologique. De plus ces composés sont solubles dans l'eau et sont utilisés comme additif alimentaire. Ils sont donc faciles d'emploi car leur dilution est aisée (par exemple dans une composition) et ils ne nécessitent pas le port d'équipement de protection particulier, tel qu'un masque respiratoire.

Au sens de la présente invention, le terme "élicitation d'une plante" désigne la stimulation des défenses naturelles d'une plante. L'élicitation n'implique aucune interaction directe du gallate d'alkyle avec un agent pathogène de la plante.

L'élicitation d'une plante se manifeste par au moins un mécanisme choisi parmi la synthèse par ladite plante de composés auto-fluorescents, l'alcalinisation du milieu extracellulaire de ladite plante, l'accumulation des transcrits marqueurs des réactions de défenses par ladite plante.

L'utilisation d'un gallate d'alkyle pour l'élicitation d'une plante peut se manifester par la synthèse de composés auto-fluorescents de types phytoalexines autour des sites d'infiltration sans induire de chlorose. Ceci traduit l'effet éliciteur du gallate d'alkyle et met également en évidence sa non phytotoxicité.

Les composés auto-fluorescents de type phytoalexines sont synthétisés dans un délai de 1 à 10 jours après utilisation du gallate d'alkyle, en particulier dans un délai de 2 à 7 jours, tout particulièrement dans un délai de 4 jours.

L'utilisation d'un gallate d'alkyle pour l'élicitation d'une plante peut également se manifester par l'alcalinisation rapide du milieu extracellulaire de ladite plante. Ce phénomène correspond à des modifications de flux ioniques au sein de la membrane plasmique avec influx massifs de protons. Cette activation des canaux ioniques constitue un événement précoce de l'interaction des cellules végétales avec un éliciteur.

L'alcalinisation du milieu extracellulaire est caractérisée par une variation de pH inférieure à 0,05 pH/min, en particulier de 0,0001 pH/min à 0,03 pH/min, et plus particulièrement de 0,001 pH/min à 0,025 pH/min dans les 60 minutes suivant l'application du gallate d'alkyle. La variation totale du pH extracellulaire est de de 0,1 à 2, en particulier de 0,2 à 3, et plus particulièrement de 0,8 à 2.

L'utilisation d'un gallate d'alkyle pour l'élicitation d'une plante peut se manifester par l'accumulation des transcrits marqueurs des réactions de défense PR1 (antimicrobien), PR2 (glucanase), PR3 (chitinase) et PR5 (thaumatine antifongique) par ladite plante.

L'accumulation des transcrits peut être mesurée par PCR quantitative en temps réel. Plus la quantité relative totale des transcrits accumulés est élevée, plus les transcrits sont abondants, plus l'effet éliciteur est fort et va permettre la synthèse d'une quantité important d'agents antimicrobiens. En particulier, 4 jours après l'utilisation d'un gallate d'alkyle, la quantité relative totale desdits transcrits accumulés est d'au moins 2, en particulier d'au moins 20, et plus particulièrement d'au moins 50.

Par "quantité relative totale desdits transcrits accumulés" on entend, au sens de la présent invention, la quantité totale desdits transcrits accumulés dans une plante traitée par rapport à une plante non traitée.

L'utilisation selon l'invention est tout à fait appropriée pour une plante choisie dans le groupe comprenant les plantes agronomiquement utiles et les plantes ornementales.

Les plantes agronomiquement utiles sont choisies dans le groupe des Angiospermes comprenant les Apiacées, les Astéracées, les Brassicacées, les Chénopodiacées, les Convolvulacées, les Cucurbitacées, les Fabacées, les Liliacées, les Polygonacées, les Rosacées, les Solanacées, les Poacées, les Vitacées.

Une seule application d'un gallate d'alkyle sur une plante avant l'attaque d'un agent pathogène peut suffire pour obtenir l'élicitation de ladite plante. Cependant, les modalités d'application dépendent bien entendu de l'espèce de plantes à traiter, et de son stade de développement, par conséquent il peut s'avérer parfois nécessaire d'appliquer le gallate d'alkyle au moins une nouvelle fois plusieurs jours ou plusieurs semaines après la première réalisation.

### Procédé

Selon un second aspect, l'invention concerne aussi un procédé d'élicitation d'une plante, qui comprend l'application d'une composition comprenant un gallate d'alkyle sur ladite plante, le gallate d'alkyle étant le seul agent actif de ladite composition,
La composition mise en oeuvre dans le procédé selon l'invention peut se présenter sous forme de poudre ou sous forme liquide.

Selon un mode de réalisation, lorsque la composition se présente sous forme liquide, elle comprend en outre, un stabilisant, un adjuvant et/ou, un conservateur.

Selon un mode de réalisation particulier du procédé selon l'invention, la composition est une composition aqueuse qui est appliquée par infiltration ou par pulvérisation foliaire ou racinaire.

Selon un mode de réalisation particulièrement préféré, la composition est une composition aqueuse qui est appliquée par pulvérisation foliaire

La concentration en gallate d'alkyle dans la composition mise en oeuvre dans le procédé selon l'invention est de 0,1 mmol.L⁻¹ à 10 mmol.L⁻¹, de préférence de 0,5 mmol.L⁻¹ à 7,5 mmol.L⁻¹, plus préférentiellement encore de 2 mmol.L⁻¹ à 5 mmol.L⁻¹.

Le procédé selon l'invention peut être mis en oeuvre sur des plantes agronomiquement utiles et les plantes ornementales. De telles plantes sont celles mentionnées ci-dessus en lien avec l'utilisation.

L'invention va être décrite de façon plus détaillée ci-dessous à l'aide des exemples suivants qui sont donnés à titre d'illustration uniquement

### Exemples

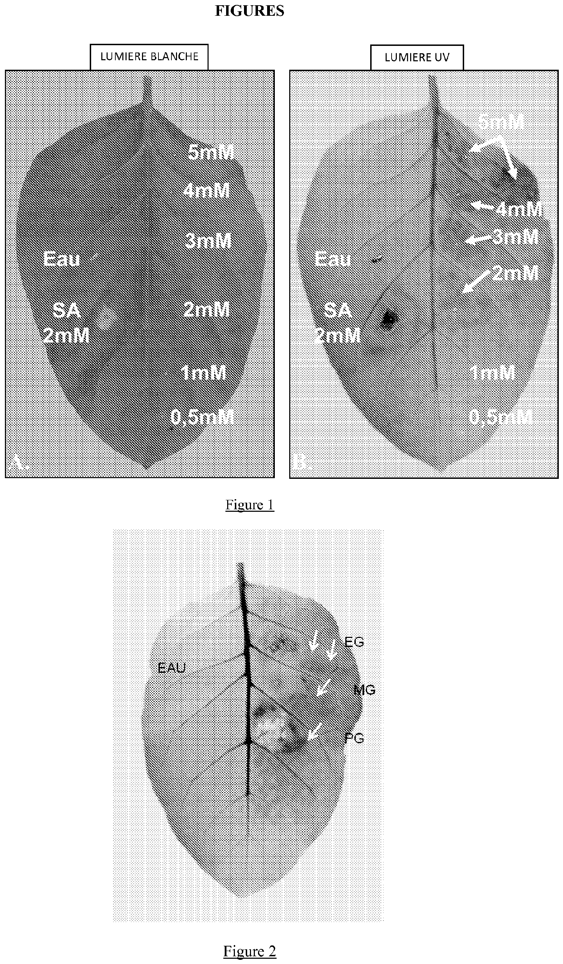

Les Exemples sont illustrés par les Figures 1 à 7.

Dans les Figures 1 à 7, la concentration molaire des solutions testées, en mmol.L⁻¹, est symbolisée par "mM".
La Figure 1 représente deux photographies d'une feuille de tabac sous lumière naturelle (A) et ultraviolet (longueur d'onde de 312 nm) (B), 4 jours après l'infiltration de solutions de gallate d'éthyle (solution EG) à différentes concentrations molaires (de 0,5 mmol.L⁻¹ à 5 mmol.L⁻¹) (à droite) et de solutions d'acide salicylique (SA) de concentration molaire de 2 mmol.L⁻¹ et d'eau, respectivement comme témoins positif et négatif.
La Figure 2 représente une photographie d'une feuille de tabac sous ultraviolet (longueur d'onde de 312 nm), 4 jours après infiltration de solutions de gallate d'éthyle (solution EG), de gallate de méthyle (solution MG) et de gallate de propyle (solution PG) de concentration molaire de 5 mmol.L⁻¹ et d'eau, comme témoin négatif.

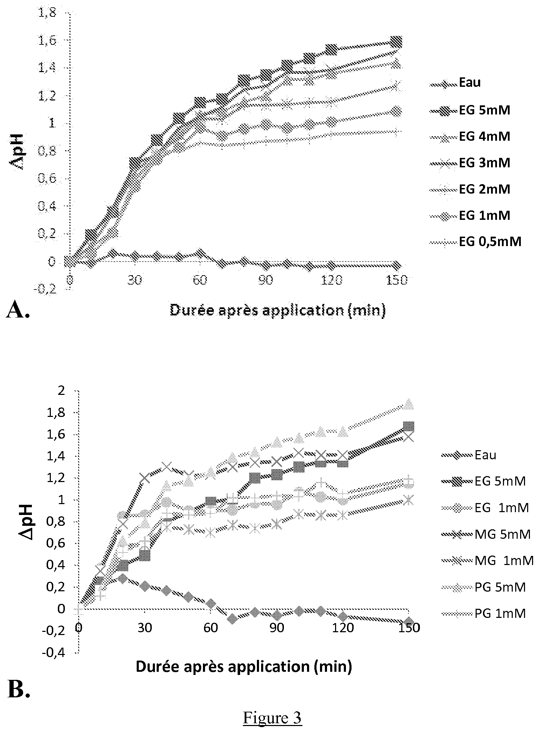

La Figure 3 représente deux graphiques de suivi du pH extracellulaire des milieux de culture BY-2 suite à l'addition de solutions EG à différentes concentrations molaires (de 0,5 mmol.L⁻¹ à 5 mmol.L⁻¹) (A) et de solutions EG, MG et PG de concentrations molaires (1 mmol.L⁻¹ et 5 mmol.L⁻¹) (B). Dans les deux cas, l'eau sert de contrôle.

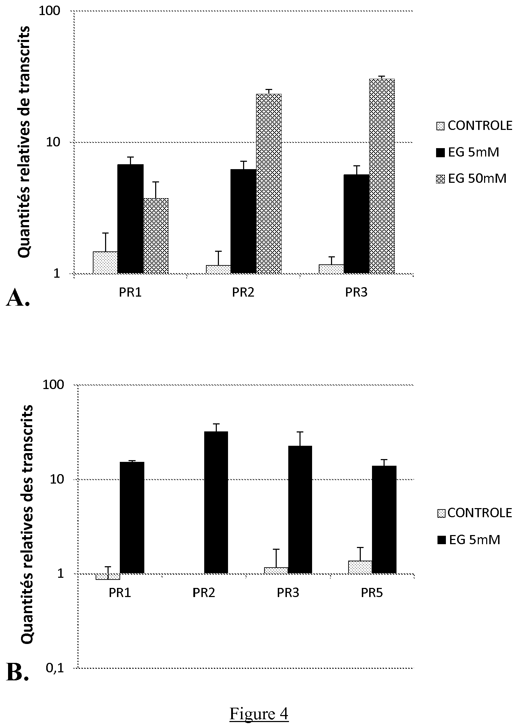

La Figure 4 représente deux graphiques indiquant les quantités relatives de transcrits codant les protéines liées à la pathogenèse (protéines PR1, PR2, PR3 et PR5) mesurées par PCR quantitative sur feuilles de tabac infiltrées (A) ou pulvérisées (B) par des solutions EG de concentrations molaires (5 mmol.L⁻¹ et 50 mmol.L⁻¹) (B). Dans les deux cas, le contrôle correspond à l'eau.

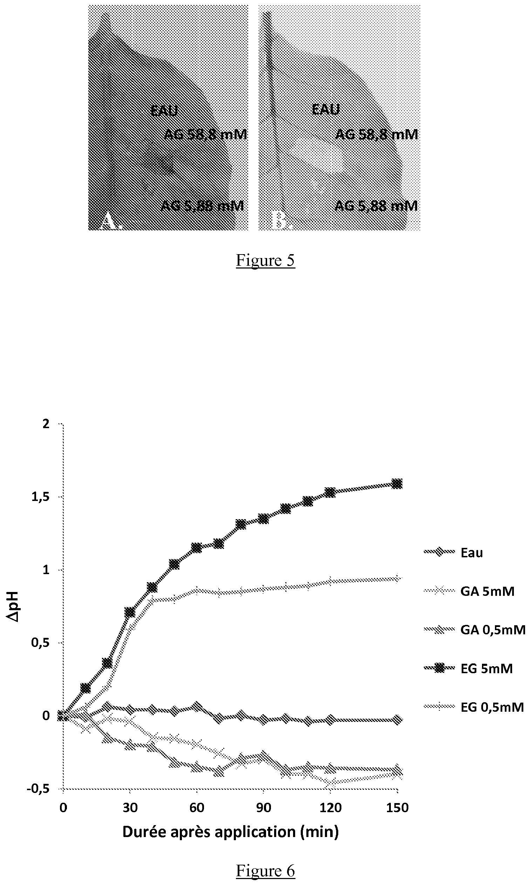

La Figure 5 représente deux photographies d'une feuille de tabac sous lumière naturelle (A) et ultraviolet (longueur d'onde de 312 nm) (B), 4 jours après l'infiltration de solutions d'acide gallique (solution AG) à différentes concentrations molaires (6 mmol.L⁻¹ et 60 mmol.L⁻¹) et d'eau (témoin négatif).
La Figure 6 représente un graphique de suivi du pH extracellulaire des milieux de culture BY-2 suite à l'addition de solutions AG et EG à différentes concentrations molaires (0,5 mmol.L⁻¹ et 5 mmol.L⁻¹). L'eau sert de contrôle.

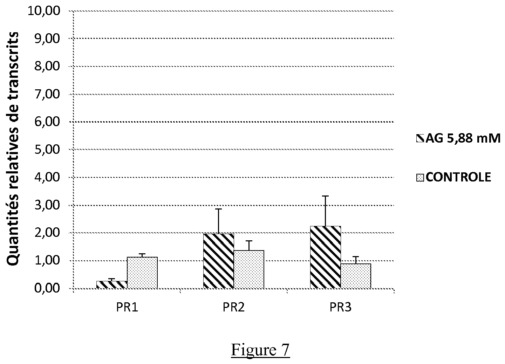

La Figure 7 représente un graphique indiquant les quantités relatives de transcrits codant les protéines liées à la pathogenèse (protéines PR1, PR2 et PR3) mesurée par PCR quantitative sur feuilles de tabac infiltrées par une solution AG d'une concentration molaire de 6 mmol.L⁻¹. Le contrôle correspond à l'eau.

### Plante modèle et solutions de gallate d'alkyle testées

Dans les Exemples 1 à 3 suivants, différentes solutions de gallate d'alkyle sont testées sur des plants de tabac (plante modèle) pour mettre en évidences les réactions de défenses de ces plants. Les plants sont âgés de 8 semaines, au stade 12-15 feuilles, cultivés en serre ou chambre de culture.

Les cultures cellulaires sont des cellules BY-2 de tabac maintenues en cultures à 24°C, sous agitation à l'obscurité.

Les différents gallates d'alkyle (gallates de méthyle, d'éthyle et de propyle) sont fournis par Sigma-Aldrich. Ces composés chimiques sont sous forme de poudre et sont solubilisés dans l'eau pour obtenir des solutions MG, EG ou PG à différentes concentrations molaires (de 0,5 mmol.L⁻¹ à 50 mmol.L⁻¹).

### Exemple 1 : Absence de Chlorose et synthèse de composés auto-fluorescents

### Mode opératoire

50 µL de différentes solutions EG de concentrations molaires (0,5 mmol.L⁻¹ à 5 mmol.L⁻¹), et de solutions MG et PG de concentration molaire de 5 mmol.L⁻¹ sont infiltrées sur la face supérieure de la feuille de tabac. Le témoin négatif est de l'eau, le témoin positif est de l'acide salicylique (SA) de concentration molaire 2 mmol.L⁻¹.

### Résultat

Les différents plants sont photographiés 4 jours après l'infiltration. Les résultats sont présentés sur les Figures 1 et 2.

On voit sur la photographie de gauche de la Figure 1, que les solutions EG n'induisent pas de chloroses, alors que sur la photographie de droite on peut voir une production importante de composés auto-fluorescents de type phytoalexines autour des sites d'infiltration. La concentration en composés auto-fluorescents augmente avec la concentration molaire mais les composés auto-fluorescents ne sont observés qu'aux concentrations allant 2 mmol.L⁻¹ à 5 mmol.L⁻¹.

Sur la photographie de la Figure 2, on peut voir que les solutions MG et PG induisent le même phénomène de production de composés auto-fluorescents autour des sites d'infiltration.

### Exemple 2 : Alcalinisation

### Mode opératoire

Des solutions EG (concentrations molaires de 0,5 mmol.L⁻¹ à 5 mmol.L⁻¹), MG (1 mmol.L⁻¹ et 5 mmol.L⁻¹), ou PG (1 mmol.L⁻¹ et 5 mmol.L⁻¹) sont ajoutées à des cultures cellulaires BY-2 de tabac au temps T₀. Le pH est mesuré en continu (toutes les 10 min) dans le milieu extracellulaire durant 150 minutes.

### Résultat

Les résultats sont présentés sur la Figure 3.

Sur les graphiques A et B de la Figure 3, on peut voir que les solutions MG, EG et PG induisent une alcalinisation rapide du milieu extracellulaire pour des concentrations molaires allant de 2 mmol.L⁻¹ à 5 mmol.L⁻¹.

En effet, quelle que soit la solution MG, EG et PG, le pH extracellulaire augmente, au cours des 60 premières minutes, d'une valeur allant de 0,6 à 1,4. Entre 60 et 150 minutes, l'augmentation du pH est moins rapide et correspond à une valeur allant de 0,1 à 0,6. Au total, après 150 minutes, la valeur du pH extracellulaire a augmenté d'une valeur allant de 0,8 à 2.

L'augmentation du pH est d'autant plus importante que la concentration molaire des solutions MG, EG et PG est importante.

### Exemple 3 : Accumulation des transcrits

### Mode opératoire

Les marqueurs de la réponse locale acquise (LAR) sont recherchés dans les feuilles de tabac traitées en mode infiltration (20 points d'infiltration par feuille/ 50µL par infiltration) ou pulvérisation (quantité suffisante pour recouvrir la feuille et obtenir la saturation, soit environ 2 mL par feuille) à raison de 3 feuilles par plant (feuilles basales non sénescentes). Les feuilles traitées sont détachées du plant 4 jours après traitement et congelées immédiatement dans l'azote liquide pour le broyage et l'extraction des ARN totaux. Les ARN sont extraits en présence de tampon CTAB selon le protocole décrit par Chang et al. (1993) [Chang S, Puryear J, Cairney J (1993) A simple and efficient method for isolation RNA from pine trees. Plant mol Biol rep 11: 113-116]. Les ARN totaux sont purifiés et traités par les DNase I (1U) et inhibiteur RNase (40U) (Euromedex) afin d'éliminer la contamination éventuelle d'ADN génomique. Le dosage des ARN totaux est obtenu au spectrophotomètre (NanoDrop-1000). L'intégrité des ARN est contrôlée par électrophorèse sur gel d'agarose (1%) par détection des sous-unités d'ARN ribosomiques. Les ADN complémentaires sont synthétisés à partir de 1 µg d'ARN totaux avec l'Euroscript Reverse Transcriptase (Eurogentec). Les réactions PCR sont réalisées avec le kit Mastermix for SYBR GREEN (Eurogentec) en utilisant le logiciel iCycler iQ5 (Bio-Rad). La spécificité de l'amplification est vérifiée par l'analyse des courbes de fusion. Le gène codant EF-1α est utilisé comme contrôle interne. La quantification des transcrits est calculée selon le modèle mathématique développée par Pfaffl (2001). [Pfaffl (2001) A new mathematical model for relative quantification in real time RT-PCR. Nucl Acids res 29: 2002-7].

### Résultat

Les résultats sont présentés sur la Figure 4.

Comme illustré sur les graphiques A et B de la Figure 4, les solutions EG de concentration molaire de 5 mmol.L⁻¹ et 50 mmol.L⁻¹ induisent l'accumulation de transcrits marqueurs des réactions de défense : PR1, PR2, PR3, PR5 dans les feuilles de tabac traitées soit par infiltration, soit par pulvérisation.

Le Tableau 1 reprend les quantités relatives des transcrits mesurées. Les valeurs indiquent qu'une application par pulvérisation permet d'accumuler plus de transcrits. Une application par pulvérisation d'une solution de gallate d'éthyle serait donc plus efficace qu'une application par infiltration pour éliciter une plante.

**Tableau 1 :**

| | Mode d'application | Quantités relatives de transcrits | | | |
|---|---|---|---|---|---|
| | | PR1 | PR2 | PR3 | PR5 |
| EG 50 mmol.L⁻¹ | Infiltration | 3,7±1,3 | 23,4±3,3 | 30,4±5,3 | Non déterminé |
| EG 5 mmol.L⁻¹ | Infiltration | 6,7±1,2 | 6,2±1,7 | 5,6±1,3 | Non déterminé |
| EG 5 mmol.L⁻¹ | Pulvérisation | 15±0,4 | 32±4,6 | 23±7,1 | 14±2,2 |

### Exemple 4 : Comparaison avec l'acide gallique

Dans cet exemple, différentes solutions d'acide gallique (AG) sont testées sur les mêmes plants de tabac que précédemment.

Les cultures cellulaires sont des cellules BY-2 de tabac maintenues en cultures à 24°C, sous agitation à l'obscurité.

L'acide gallique est fourni par Sigma-Aldrich et solubilisé dans l'eau pour obtenir des solutions de différentes concentrations (solution AG).

### Chlorose et synthèse de composés auto-fluorescents

### Mode opératoire

Deux solutions AG (58,8 mmol.L⁻¹ et 5,88 mmol.L⁻¹) sont infiltrées sur la face supérieure de la feuille de tabac. Le témoin négatif est de l'eau.

### Résultat

Les différents plants sont photographiés 4 jours après l'infiltration. Les résultats sont présentés sur la Figure 5.

En comparant les photographies de la Figure 5, on peut voir que les solutions AG induisent une forte chlorose non accompagnée de zones auto-fluorescentes autour des zones d'infiltration suggérant le caractère phytotoxique et non éliciteur de AG.

### Alcalinisation

### Mode opératoire

Deux solutions AG (0,5 mmol.L⁻¹ et 5 mmol.L⁻¹) sont rajoutées à des cultures cellulaires BY-2 de tabac au temps T₀. Le pH est mesuré en continu (toutes les 10 min) dans le milieu extracellulaire durant 150 minutes. Des solutions EG à différentes concentrations molaires (0,5 mmol.L⁻¹ et 5 mmol.L⁻¹) sont utilisées en tant que témoin.

### Résultat

Les résultats sont présentés sur la Figure 6.

Le graphique de la Figure 6 met en évidence que, contrairement aux solutions EG, les solutions AG n'ont pas d'effet sur le pH du milieu de culture.

### Accumulation des transcrits

### Mode opératoire

Les marqueurs de la réponse locale acquise (LAR) sont recherchés dans les feuilles de tabac infiltrées par une solution AG d'une concentration molaire de 5,88 mmol.L⁻¹.

4 jours après l'infiltration, les transcrits codant les protéines reliées à la pathogenèse (protéines PR) sont mesurés par PCR quantitative en temps réel. Les ARN totaux sont extraits à partir des feuilles de tabac infiltrées. Les ADNc sont synthétisés et les transcrits d'intérêt sont quantifiés à l'aide d'amorces spécifiques des gènes PR1, PR2 et PR3.

### Résultat

Les résultats sont présentés sur la Figure 7.

Comme illustré sur le graphique de la Figure 7, la solution AG infiltrée n'induit pas d'accumulation de transcrits de façon significative par rapport à l'eau.

### Conclusion des Exemples :

Le gallate d'éthyle induit diverses réactions de défenses au sein de la feuille de tabac traitée (par infiltration) telle que la production de composés auto-fluorescents de type phytoalexines sans induire de chlorose. Ceci suggère que le gallate d'éthyle n'est pas phytotoxique. Le gallate d'éthyle induit également l'alcalinisation du milieu extracellulaire des cultures de tabac BY-2, et l'accumulation des transcrits PR.

Tous ces mécanismes manifestent l'action d'un éliciteur sur les cellules végétales. Les gallates de méthyle et propyle présentent également une activité élicitrice démontrée par l'induction de composés auto-fluorescents et l'alcalinisation du milieu extracellulaire des cultures de tabac BY-2.

Par contre, l'acide gallique ne stimule pas les réactions de défense.

## Revendications

1. Utilisation d'un gallate d'alkyle représenté par la Formule 1 : 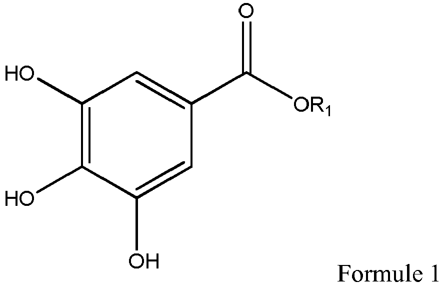 dans laquelle R₁ est un groupe alkyle,
pour l'élicitation d'une plante.

2. Utilisation selon la revendication 1, **caractérisée** en ce le groupe alkyle est un groupe alkyle linéaire comprenant de préférence de 1 à 10 atomes de carbone.

3. Utilisation selon la revendication 1 ou 2, **caractérisée en ce que** le groupe alkyle est choisi dans le groupe comprenant le méthyle, l'éthyle et le propyle.

4. Procédé d'élicitation d'une plante, qui comprend l'application d'une composition comprenant un gallate d'alkyle sur ladite plante, le gallate d'alkyle étant le seul agent actif de ladite composition.

5. Procédé selon la revendication 4, **caractérisé en ce que** la composition est une composition aqueuse qui est appliquée par infiltration, ou pulvérisation foliaire ou racinaire, de préférence par pulvérisation foliaire.

6. Procédé selon la revendication 4 ou 5, **caractérisé en ce que** la concentration en gallate d'alkyle dans la composition aqueuse est de 0,1 mmol.L⁻¹ à 10 mmol.L⁻¹, de préférence de 0,5 mmol.L⁻¹ à 7,5 mmol.L⁻¹, plus préférentiellement encore de 2 mmol.L⁻¹ à 5 mmol.L⁻¹.

7. Utilisation selon l'une quelconque des revendications 1 à 3 ; ou procédé selon l'une quelconque des revendications 4 à 6, **caractérisée en ce que** la plante est choisie dans le groupe comprenant les plantes agronomiquement utiles et les plantes ornementales, aromatiques et médicinales.

## Patentansprüche

1. Verwendung eines Alkylgallats mit der Formel 1: 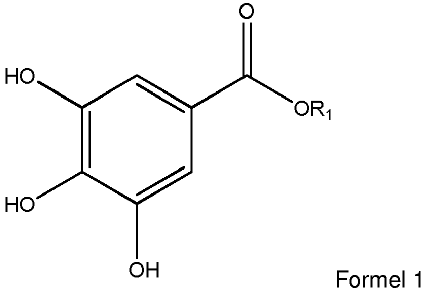 wobei R₁ eine Alkylgruppe ist,
zur Elizitation einer Pflanze.

2. Verwendung nach Anspruch 1, **dadurch gekennzeichnet, dass** die Alkylgruppe eine lineare Alkylgruppe mit vorzugsweise 1 bis 10 Kohlenstoffatomen ist.

3. Verwendung nach Anspruch 1 oder 2, **dadurch gekennzeichnet, dass** die Alkylgruppe ausgewählt ist aus der Gruppe umfassend Methyl, Ethyl und Propyl.

4. Verfahren zur Elizitation einer Pflanze, welches das Aufbringen einer Zusammensetzung, umfassend ein Alkylgallat, auf die Pflanze umfasst, wobei das Alkylgallat das einzige aktive Mittel der Zusammensetzung ist.

5. Verfahren nach Anspruch 4, **dadurch gekennzeichnet, dass** die Zusammensetzung eine wässrige Zusammensetzung ist, die durch Infiltration oder Zerstäubung auf die Blätter oder Wurzeln aufgebracht wird, vorzugsweise durch Zerstäubung auf die Blätter.

6. Verfahren nach Anspruch 4 oder 5, **dadurch gekennzeichnet, dass** die Konzentration von Alkylgallat in der wässrigen Zusammensetzung von 0,1 mmol.l⁻¹ bis 10 mmol.l⁻¹, vorzugsweise von 0,5 mmol.l⁻¹ bis 7,5 mmol.l⁻¹, noch stärker bevorzugt von 2 mmol.l⁻¹ bis 5 mmol.l⁻¹ beträgt.

7. Verwendung nach einem der Ansprüche 1 bis 3, wobei nach einem der Ansprüche 4 bis 6 vorgegangen wird, **dadurch gekennzeichnet, dass** die Pflanze ausgewählt ist aus der Gruppe umfassend landwirtschaftliche Nutzpflanzen und Zier-, aromatische und medizinische Pflanzen.

## Claims

1. Use of an alkyl gallate represented by Formula 1: 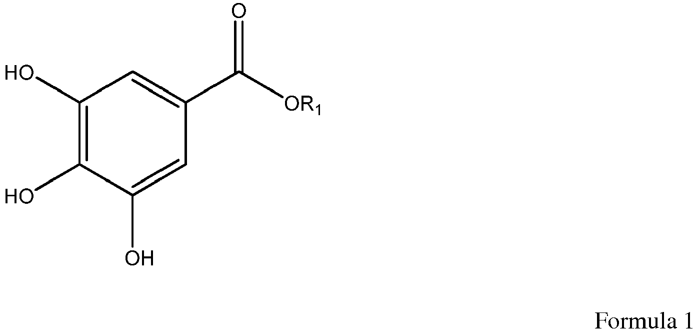 where R₁ is an alkyl group,
for the elicitation of a plant.

2. The use according to Claim 1, **characterized in that** the alkyl group is a linear alkyl group preferably including from 1 to 10 carbon atoms.

3. The use according to Claim 1 or 2, **characterized in that** the alkyl group is selected from the group including methyl, ethyl and propyl.

4. A method for elicitation of a plant, which includes the application of a composition including an alkyl gallate on said plant, the alkyl gallate being the only active agent of said composition.

5. The method according to Claim 4, **characterized in that** the composition is an aqueous composition which is applied by infiltration or spraying of the leaf or root, preferably by spraying of the leaf.

6. The method according to Claim 4 or 5, **characterized in that** the alkyl gallate concentration in the aqueous composition is from 0.1 mmol·L⁻¹ to 10 mmol·L⁻¹, preferably from 0.5 mmol·L⁻¹ to 7.5 mmol·L⁻¹, even more preferably from 2 mmol·L⁻¹ to 5 mmol·L⁻¹.

7. The use according to any one of Claims 1 to 3, or the method according to any one of Claims 4 to 6, **characterized in that** the plant is selected from the group including the agronomically useful plants and the ornamental, aromatic and medicinal plants.
